Europäisches Patentamt

European Patent Office

Office européen des brevets

(11) Veröffentlichungsnummer: **0 270 010**
A2

## (12) EUROPÄISCHE PATENTANMELDUNG

(21) Anmeldenummer: 87117514.7

(22) Anmeldetag: 26.11.87

(51) Int. Cl.⁴ **B65D 83/04** , B65D 83/06

(30) Priorität: 28.11.86 DE 3640819

(43) Veröffentlichungstag der Anmeldung:
08.06.88 Patentblatt 88/23

(84) Benannte Vertragsstaaten:
AT BE CH DE FR GB IT LI LU NL

(71) Anmelder: **Mönnich GmbH & Co. KG**
**Leipziger Strasse 363-365**
**D-3500 Kassel 31(DE)**

(72) Erfinder: **Markau, Eike**
**Am Dachsacker 35**
**D-3501 Niesetal(DE)**

(74) Vertreter: **Mitscherlich, Hans, Dipl.-Ing. et al**
**Patentanwälte Dipl.-Ing. H. Mitscherlich**
**Dipl.-Ing. K. Gunschmann Dipl.-Ing.**
**Dr.rer.nat. W. Körber Dipl.-Ing. J.**
**Schmidt-Evers Dipl.-Ing. W. Melzer**
**Steinsdorfstrasse 10**
**D-8000 München 22(DE)**

(54) **Dosiervorrichtung zum Dosieren von rieselfähigen Produkten, insbesondere Süssstoff.**

(57) Eine Dosiervorrichtung mit Vorrats-Behälter (2) und Schieber (9) zum Dosieren von rieselfähigen Produkten, soll so ausgestaltet werden, daß sie zum Dosieren von pulverförmigen Produkten oder Tabletten geeignet ist. Dies wird dadurch erreicht, daß im Vorrats-Behälter (2) zwei Schächte (7, 15) angeordnet sind, an deren Ausmündungen (10, 14) der Schieber (9) angeordnet ist, der eine dem einen Schacht (7) zugeordnete Ausnehmung (22) für Tabletten und/oder eine dem anderen Schacht (15) zugeordnete Ausnehmung (21) für pulverförmige Produkte aufweist, wobei jeweils eine Schacht (7, 15) durch den Schieber (9) vorschlossen ist.

FIG. 1

## Dosiervorrichtung zum Dosieren von rieselfähigen Produkten, insbesondere Süßstoff

Die Erfindung bezieht sich auf eine Dosiervorrichtung nach dem Oberbegriff des Anspruchs 1.

Zum Dosieren von Tabletten oder Süßstoff in rieselfähiger Form sind Dosiervorrichtungen bekannt, bei denen das Dosiergut in einem Behälter aufgenommen ist, in dessen Boden ein Schacht angeordnet ist, der in eine Dosier-Ausnehmung in einem Schieber mündet. Der Schieber ist quer zum Schacht verschiebbar und zwar zwischen einer Stellung, in der der Schacht in die Ausnehmung mündet, nämlich der Ausgangsstellung und einer gegenüber letzterer verschobenen Stellung, nämlich einer Dosierstellung, in der das in der Ausnehmung dosierte Gut aus der Ausnehmung herausfallen kann.

Bei bekannten Dosiervorrichtungen treten bei ihrem Einsatz zum Dosieren von Tabletten und pulverförmigen Produkten wesentliche Dosierungsunterschiede auf, weil eine z.B. runde Tablette ein geringeres Volumen als die Ausnehmung aufweist. Außerdem ist die Tablette aufgrund notwendigen Bewegungsspiels im Querschnitt kleiner zu bemessen als die Ausnehmung, um Verklemmungen zu vermeiden. Dies gilt sowohl für runde als auch für eckige wie viereckige Tabletten, für die eine Dosier-Ausnehmung vorgesehen wird, deren entsprechende Abmessung an das Diagonalmaß bzw. an den Durchmesser der Tablette unter Berücksichtigung des Bewegungsspiels angepaßt ist. Bei der Verarbeitung von pulverförmigem Gut entspricht dagegen die in der Dosier-Ausnehmung dosierte Menge dem Volumen der Ausnehmung. Die bekannten Ausgestaltungen sind somit in solchen Fällen nicht einsetzbar, in denen es auf eine bestimmte Dosierung ankommt, bzw. in denen derselbe Stoffe sowohl in Form von Tabletten als auch in pulverförmiger Form vorliegt.

Der Erfindung liegt die Aufgabe zugrunde, eine Dosiervorrichtung der eingangs bezeichneten Art so auszugestalten, daß sie zum Dosieren von Tabletten oder pulverförmigen Produkten verwendbar ist.

Diese Aufgabe wird durch das Kennzeichen des Anspruchs 1 gelöst.

Bei der erdingungsgemäßen Ausgestaltung ist wesentlich, daß zwei Schachtmündungen vorhanden sind, die jeweils mit einer zugehörigen Dosier-Ausnehmung eines für Tabletten oder pulverförmigen Produktes bestimmten Volumens zusammenwirken. Die erfindungsgemäße Dosiervorrichtung kann somit zum Dosieren von Tabletten oder pulverförmigen Produkten auch dann eingesetzt werden, wenn es sich um denselben Stoff oder unterschiedliche Stoffe handelt.

Die erste im Anspruch 1 enthaltene alternative Lösung ermöglicht den wahlweisen Einsatz der Dosiervorrichtung für Tabletten und pulverförmige Produkte. Dabei kann die entsprechende Verlagerung nach Anspruch 3 des Schiebers sowohl durch Drehen desselben, z.B. um 180° um seine Längsachse oder Über-Kopf-Drehung (Vertauschung der Enden) als auch durch eine axiale Verlagerung desselben erreicht werden.

Bei der zweiten, im Anspruch 1 enthaltenen Alternative ist es vorteilhaft, zwei Schieber gemäß Anspruch 2 einzusetzen. Die Verwendungsmöglichkeit dieser erfindungsgemäßen Dosiervorrichtung wird somit durch die Auswahl des entsprechenden Schiebers bestimmt.

Der sich jeweils nicht in Benutzung befindliche Schacht ist durch den jeweiligen Schieber unterseitig verschlossen und somit außer Funktion gesetzt. Die beabsichtigte Dosierung kann durch eine entsprechende Bemessung der Schächte bzw. der Dosier-Ausnehmungen genau vorbestimmt werden.

Die durch die Erfindung erzielbaren Vorteile sind sowohl für den Verbraucher als auch für den Hersteller vorteilhaft, weil die Dosiereinrichtung ggf. wahlweise zum Dosieren von Tabletten und pulverförmigem Gut benutzt werden kann, und weil es trotz wahlweiser Verwendung der Dosiervorrichtung zum Dosieren für Tabletten oder pulverförmigem Gut nur eines Behälters bedarf.

Die Ausgestaltung nach Anspruch 4 ist bezüglich des Schachtes für pulverförmiges Gut hinsichtlich guter Raumausnutzung und bezüglich des Schachtes für Tabletten hinsichtlich einer geordneten Führung der Tabletten von Vorteil. Letzteres gilt auch für die Ausbildungen nach den Ansprüchen 5 bis 8, bei denen u.a. aufgrund der Anordnung bzw. Größe der Schächte für pulverförmiges Gut ein Eindringen von Tabletten erschwert oder verhindert ist. Die Anordnung gemäß Anspruch 6 ist außerdem deshalb vorteilhaft, weil durch die Schieberbewegungen den sich jeweils oberhalb des Schiebers angeordneten Tabletten Anstöße übertragen werden, die sich vorteilhaft auf die Einordnung der Tabletten im Schacht auswirken.

Zu einer verbesserten Einordnung führen auch die Ausgestaltungen nach den Ansprüchen 9 bis 11.

Die im Anspruch 12 enthaltenen Merkmale führen einerseits zu einem verrigerten Hub, weil die Tablette eher aus der Dosier-Ausnehmung herausfallen kann, und andererseits zu einer einfachen und praktischen Ausgestaltung.

Gemäß Anspruch 13 wird eine einfache Halterung für den Schieber erreicht, die sich leicht und schnell montieren bzw. demontieren läßt.

Die im Anspruch 14 enthaltenen Merkmale sind sowohl aus funktionellen als auch aus herstellungstechnischen Gründen von Vorteil.

Dagegen sind die Ausgestaltungen nach den Ansprüchen 15 und 16 aus handhabungstechnischen und optischen Gründen von Vorteil.

Nachfolgend wird die Erfindung anhand von in Zeichnungen dargestellten bevorzugten Ausführungsbeispielen näher erläutert. Es zeigt

Fig. 1 eine erfindungsgemäß ausgestaltete Dosiervorrichtung zum wahlweisen Dosieren von Tabletten oder pulverförmigen Produkten in zwei Ausführungsbeispielen im vertikalen Schnitt;

Fig. 2 den Schnitt II-II in Fig. 1;

Fig. 3 einen Schieber für pulverförmige Produkte in der Draufsicht;

Fig. 4 einen Schieber für Tabletten in der Draufsicht;

Fig. 5 den Schieber nach Fig. 4 in der Stirnansicht;

Fig. 6 eine Dosiervorrichtung als drittes Ausführungsbeispiel in der Draufsicht;

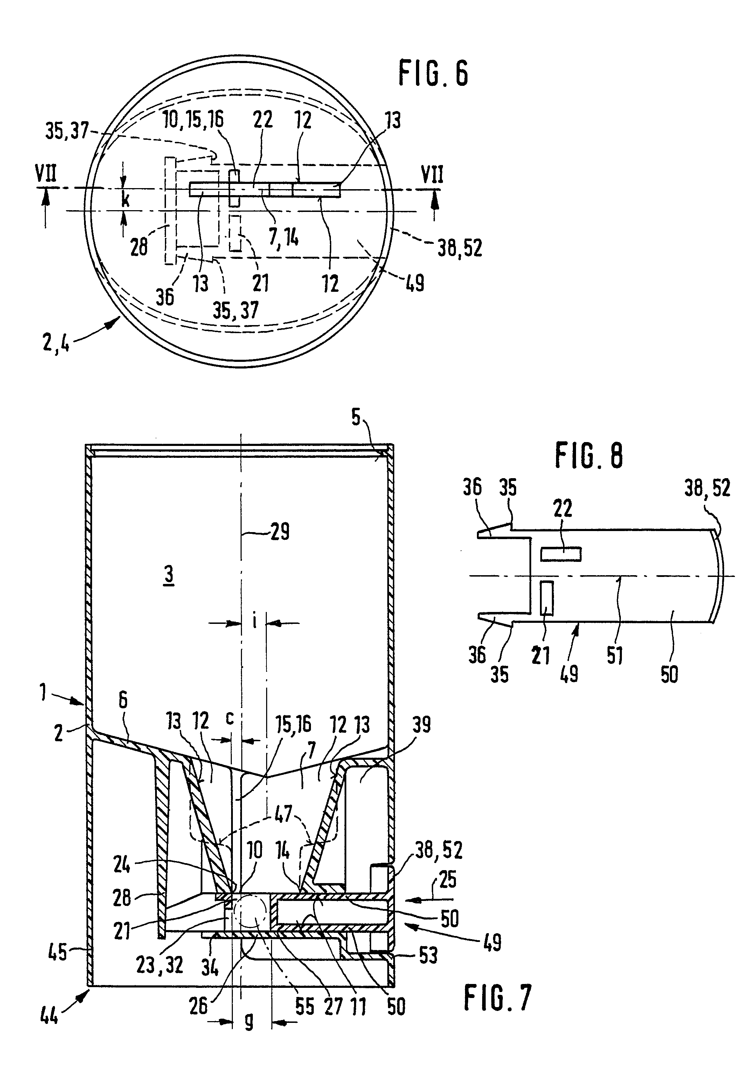

Fi.g 7 den Schnitt VII-VII in Fig. 6;

Fig. 8 den Schieber der Dosiervorrichtung nach Fig. 6 in der Draufsicht.

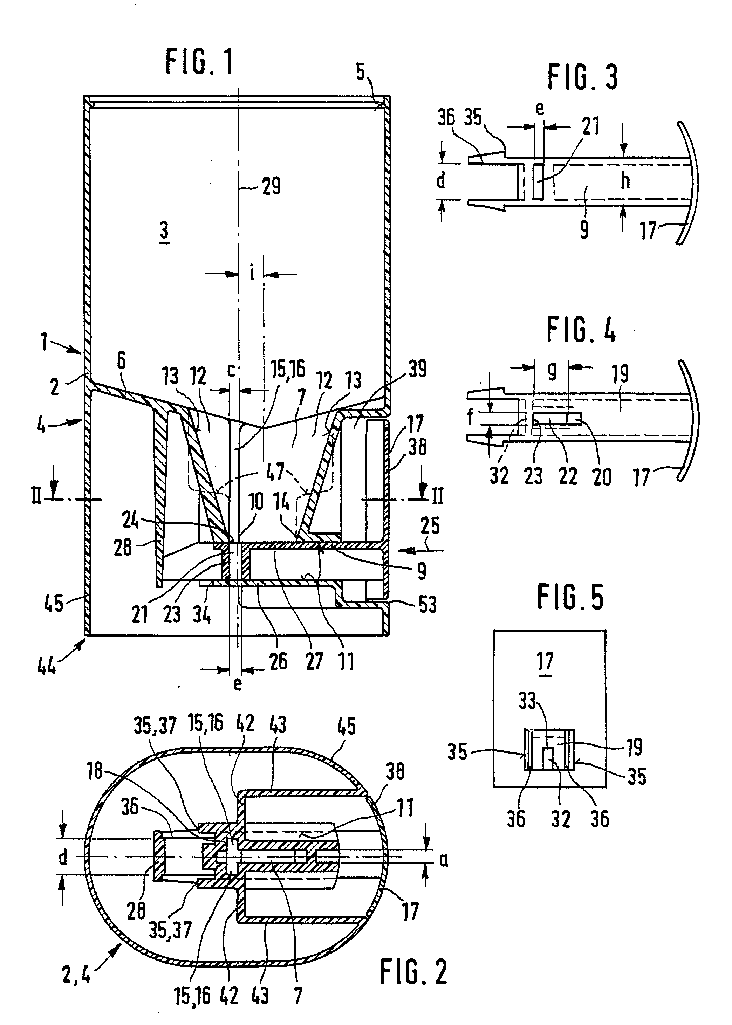

Die in Fig. 1 allgemein mit 1 bezeichnete Dosiervorrichtung besteht aus einem einen Behälter 2 mit einem Vorratsraum 3 umgebenden Gehäuse 4, das oberseitig eine Füllöffnung 5 aufweist, die durch einen nicht dargestellten, im Bereich des Öffnungsrandes einrastbaren Deckel verschließbar ist.

Vom Vorratsraum 3 erstreckt sich in etwa mittlerer Position zum Behälterboden 6 ein erster Schacht 7 nach unten, der unterseitig durch einen horizontalen, d.h. sich quer zum Schacht 7 erstreckenden Dosierschieber 9 begrenzt ist, der in einer Schieberführung 11 zwischen der dargestellten Ausgangsstellung und einer gegenüber dieser nach links verschobenen Dosierstellung von Hand verschiebbar ist. Der Schacht 7 weist einen im horizontalen Schnitt rechteckigen Querschnitt auf, der sich längs des Schiebers 9 erstreckt. Während die Breitseiten 12 des Schachtes 7 sich prallel und im wesentlichen senkrecht erstrecken, sind die Schmalseiten 13 des Schachtes 7 nach unten konisch und zwar konvergent geneigt. An der durch den Schieber 9 vorgegebenen unteren Begrenzung des Schachtes 7 ergibt sich somit eine im Querschnitt rechteckige Schachtmündungsöffnung 14 bestimmter Größe. Dieser erste Schacht 7 ist für die Zuführung von runden Tabletten zum Schieber 9 bestimmt. Der Abstand a zwischen den Breitseiten 12, der auch der Breite der Schachtöffnung 14 entspricht, ist etwas größer bemessen als die Dicke der Tabletten. Die mit b bezeichnete, sich längs des Schiebers 9 ersteckende Breite der Schachtöffnung 14 entspricht einem vielfachen des Durchmessers der Tabletten.

In den ersten Schacht 7 ist ein zweiter Schacht 15 mit einer ebenfalls im Querschnitt rechteckigen Schachtmündungsöffnung 10 integriert, der durch zwei Nuten 16 gebildet ist, die in den Breitseiten 12 des ersten Schachtes 7 in einander gegenüberliegender Position von Vorratsraum 3 ebenfalls bis zum Schieber 9 verlaufen. Der zweite Schacht 15 ist rechtwinklig zum ersten Schacht 7 angeordnet, d.h. die beiden Schächte 7, 15 kreuzen sich, so daß sie einen gemeinsamen Schachtabschnitt aufweisen. Die Anordnung ist so getroffen, daß die dem Betätigungskopf 17 des Schiebers 9 entfernt liegenden Schachtwände 18 des zweiten Schachtes 15 mit der dem Betätigungskopf 17 ebenfalls entfernt liegenden Begrenzungskante der ersten Dosieröffnung 14 in einer senkrechten Ebenen liegen. D.h., die beiden sich kreuzenden Schächte 7, 15 ergeben im horizontalen Querschnitt eine T-Form.

Die Nuten 16 bzw. der zweite Schacht 15 ist schmaler bemessen c als der erste Schacht 7, so daß in Längsrichtung des zweiten Schachtes 15 angeordnete Tabletten in diesen, d.h. in die Nuten 16, nicht eindringen können.

Dem Behälter 2 ist neben dem Schieber 9 ein zweiter, in Fig. 4 dargestellter Dosierschieber 19 zugeordnet, die wahlweise in die Führung 11 einsetzbar sind. Die Schieber 9 und 19 unterscheiden sich durch zwei senkrecht durchgehende Dosierausnehmungen 21, 22, von denen die im Schieber 9 angeordnete Ausnehmung 21 einen rechteckigen Querschnitt aufweist, der sich bezüglich ihrer Längsrichtung quer zum Schieber 9 erstreckt, und zwar befindet sich die Ausnehmung 21 in der Ausgangsstellung des Schiebers 9 unterhalb des zweiten Schachtes 15 (Fig. 1), wobei die Länge d der Ausnehmung 21 der zugehörigen Breite des zweiten Schachtes 15 entspricht. Dagegen ist die Breite e der Ausnehmung 21 etwas größer bemessen als die kleinere Breite c des zweiten Schachtes 15, was in den Fig. 1 und 2 deutlich zu erkennen ist.

Die Ausnehmung 22 im Schieber 19 erstreckt sich längs und mittig zu diesem. Ihre Breite f entspricht der geringeren Breite a des ersten Schachtes 7, und ihre Länge g ist geringfügig größer bemessen als der Durchmesser der Tabletten. In der Ausgangsstellung des zweiten Schiebers 19, d.h. in dessen Stellung gemäß Fig. 1, befindet sich die dem Betätigungskopf 17 des Schiebers 19 entferntere Ausnehmungswand 23 unterhalb der dem Betätigungskopf 17 ebenfalls entfernteren Begrenzungskante 24 der Dosieröffnung 14. Mit 20 ist eine Einlaufschräge am Schieber 19 bezeichnet.

Zum Dosieren von einem pulverförmigen Produkt, z.B. pulverförmigem Süßstoff, wird der Schieber 9 in die Führung 11 eingesetzt. Nach einer Befüllung des Vorratsraums 3 mit pulverförmigem Süßstoff füllt sich die Dosier-Ausnehmung 21 aufgrund der Schwerkraft automatisch mit Süßstoff, wobei durch das vorgegebene Volumen eine genaue Dosierung erfolgt. Die Ausnehmung 21 ist dabei unterseitig durch eine Wand der Führung 11 verschlossen. Durch manuellen Druck in Richtung des Pfeiles 25 auf den Schieber 9 wird die Ausnehmung 21 nach links in die nicht dargestellte Dosierstellung verschoben, in der sie unterseitig durch den Boden 26 der Führung 11 nicht mehr abgedeckt ist, so daß die dosierte Menge aus der Ausnehmung 21 frei herausfallen kann. In der Dosierstellung sind die Schächte 7 und 15 durch die obere Wand 27 des kastenprofilförmigen Schiebers 9 abgedeckt. Hierzu ist erforderlich, daß die Breite h des Schiebers 9 wenigstens so groß bemessen ist, wie die größere Breite des zweiten Schachtes 15, die der größeren Breite d der Ausnehmung 21 entspricht.

Die Rückführung des Schiebers 19 aus seiner Dosierstellung in die Ausgangsstellung erfolgt automatisch durch eine Rückstellfeder 28, die beim vorliegenden Ausführungsbeispiel einstückig an den Behälter 2 angeformt ist und zwar hier an den Behälterboden 6, d.h., die Rückstellfeder 28 erstreckt sich in etwa senkrecht, d.h. parallel zur mit 29 bezeichneten senkrechten Achse des Behälters 2 bzw. der Dosiervorrichtung 1. Die senkrechte Mittelachse 30 des ersten Schachtes 7 ist zum Betätigungskopf 17 des Schiebers 9, 19 hin um das Maß i versetzt.

Eine entsprechende Funktion erfolgt auch bei Benutzung des Schiebers 19 für Tabletten. Hier erfolgt allerdings eine Vereinzelung der Tabletten, während im vorbeschriebenen Fall eine Dosierung des pulverförmigen Produktes stattfindet. Eine weitere Unterschied zu dem zweiten Schieber 19 besteht auch noch darin, daß in der dem Betätigungskopf 17 entfernteren Ausnehmungswand 23 eine Aussparung 32 vorhanden ist, durch die hindurch die jeweilige Tablette herausfallen kann, und zwar sobald der Abstand zwischen der Oberkante 33 der Aussparung 32 und der Vorderkante 34 des Bodens 26 der Führung 11 größer ist als der Durchmesser der Tablette. Hierdurch wird der für den zweiten Schieber 19 erforderliche Hub verringert, so daß er in etwa dem Hub des ersten Schiebers 9 entspricht.

Ansonsten sind die Schieber 9 und 19 gleich ausgebildet, abgesehen von unterschiedlichen Farben, die zur Unterscheidung des Benutzungszwecks vorgesehen sein können.

Die Rückstellbewegung des jeweiligen Schiebers 9, 19 wird durch Verrastungsnasen 35 begrenzt, die an den Außenseiten von einander gegenüberliegenden, quer elastisch einbiegbaren Verrastungs-Armen 36 angeordnet sind und mit Anschlagkanten 37 am Gehäuse 2 zusammenwirken. Die Arme 36 ragen einander seitlich gegenüberliegend stirnseitig vor. Beim Einstecken des jeweiligen Schiebers 9, 19 in die vorhandene Führungsausnehmung 11 werden die Arme 36 eingebogen und sie schnellen hinter den Anschlagkanten 37 automatisch in ihre Normalstellung, in der sie bei einer Verschiebung auf die Anschlagkanten 37 treffen. Zur Demontage eines Schiebers 9, 19 is es erforderlich, die Arme 36 einzubiegen.

In der Ausgangsstellung schließt der Betätigungskopf, der durch eine dünne, zylindrisch gekrümmte Platte 38 gebildet ist, mit dem Umfang des Behälters 2 ab, d.h., die Krümmungen sind gleich (Fig. 2). Innenseitig vom Betatigungskopf 17 befindet sich ein entsprechend geformter Hohl- bzw. Freiraum 39, in den hinein der Betatigungskopf 17 bei einer Verschiebung des Schiebers 9, 19 in die Freigabestellung eintaucht.

Im Rahmen der Erfindung ist es auch möglich, anstelle eines sich mit seinen Schmalseiten 13 nach unten konisch verjüngenden ersten Schachtes 7 einen sich mit seinen Schmalseiten stufenförmig verjüngenden ersten Schacht anzuordnen, dessen Schulterflächen 47 vorzugsweise zur Schachtmitte hin geneigt sind. Wie schon durch den konischen Schacht 7 wird auch durch einen solchen stufenförmigen Schacht eine Ein- bzw. Vorordnung der Tabletten erzielt.

Bei den vorliegenden Ausführungsbeispielen bestehen das Gehäuse 4 und die Schieber 9, 19, 49 aus Kunststoff, wobei es sich jeweils um einstückig durch spritzgießen hergestellte Kunststoffteile handelt. Zwecks Verstärkung sind die Wände der Führung 11 durch quer und parallel zur Führung 11 verlaufende Versteifungswände 42, 43 mit der im Bereich des Schiebers 9, 19 zu einem Standfuß 44 heruntergezogenen Umfangswand 45 verbunden.

Dem ersten Ausführungsführungsbeispiel entsprechende Teile der Dosiervorrichtung gemäß Fig. 6 bis 8 sind mit gleichen Positionszeichen versehen.

Beim dritten Ausführungsbeispiel gemäß Fig. 6 bis 8 ist zur wahlweisen Dosierung von Tabletten oder einem pulverförmigen Produkt nur ein einziger Schieber 49 vorgesehen, im dem sowohl die Dosier-Ausnehmung 21 für das pulverförmige Produkt als auch die Dosier-Ausnehmung 22 für Tabletten ausgebildet sind. Die Ausnehmungen 21, 22 befinden sich - quer zur Verschieberichtung 25 gesehen - in der gleichen Position wie beim ersten Ausführungsbeispiel, jedoch befinden sie sich - in der Draufsicht gesehen - in Nebeneinanderanordnung. Der Schieber 49 ist deshalb wesentlich breiter als beim ersten Ausführungsbeispiel bemessen und zwar so breit, daß zum einen die Ausnehmungen 21. 22 nebeneinander angeordnet werden können und zum anderen die unterseitige Abdeckung der Schächte 7. 15 gewährleistet ist.

In der Fig. 7 dargestellten Position befindet sich die Ausnehmung 22 für Tabletten in Funktionsstellung, wobei der Schieber 49 sich in seiner Ausgangsposition befindet. In dieser Position ist der Schacht 15 durch die mit 50 bezeichnete, in Fig. 7 obere Wand unterseitig abgedeckt. Die Anordnung ist so getroffen. daß bei einem Einsatz des Schiebers 49 in einer um seine Längsache 51 um 180° gedrehten Position die Ausnehmung 21 für pulverförmiges Gut sich unter dem Schacht 15 befindet, während die Ausnehmung 22 für Tabletten auf der Seite angeordnet ist, auf der sich gemäß Fig. 8 die Ausnehmung 21 für pulverförmiges Gut befindet. Die jeweils nicht in ihrer Funktionsstellung befindliche Ausnehmung 21, 22 ist von der Schachtmündung 10 bzw. 14 getrennt. Damit das Drehen des Schiebers 49 problemlos erfolgen kann. ist sein Betätigungskopf 52 bezüglich seiner Position gegenüber dem Schieberschaft symmetrisch angeordnet, so daß die Position des Betätigungskopfes 52 in beiden Verdrehstellungen mit der ihn aufnehmenden Ausnehmung 53 in der Wand 45 übereinstimmt. Damit auch die Krümmung der Außenfläche des Betätigungskopfes 52 in beiden Verdrehstellungen mit der Krümmung des in seinem oberen Bereich runden und im seinem unteren Bereich ellipsenförmig (vgl. Fig. 6) geformten Gehäuses 4 übereinstimmt. sind die Schächt 7, 15 um den Mittenabstand k außermittig versetzt (Fig. 6), wobei der Schieber 49, wie schon beim ersten Ausführungsbeispiel, mittig angeordnet ist.

Im Unterschied zum ersten Ausführungsbeispiel bedarf es beim vorliegenden Ausführungsbeispiel zweier in der vertikalen einander gegenüberliegender Wände 50 am Schieber 49. damit die unterseitige Abdeckung der Schächte 7, 15 bzw. deren Trennung von der sich nicht in Funktionsstellung befindlichen Ausnehmung 21, 22 gewährleistet ist.

Entsprechend den Querschnittsabmessungen des Schiebers 49 ist auch die bei diesem Ausführungsbeispiel mit 54 bezeichnete Führung bemessen.

In Fig. 7 ist eine sich in der Ausnehmung 22 befindliche runde Tablette andeutungsweise dargestellt und mit 55 bezeichnet.

## Ansprüche

1. Dosiervorrichtung mit Vorrats-Behälter und Schieber zum Dosieren von rieselfähigen Produkten, insbesondere Süßstoff,
dadurch gekennzeichnet,
daß im Vorrats-Behälter (2) zwei Schächte (7, 15) angeordnet sind. an deren Ausmündungen (10. 14) der Schieber (9. 19. 49) angeordnet ist. der eine dem einen Schacht (7) zugeordnete Ausnehmung (22) für Tabletten und/oder eine dem anderen Schacht (15) zugeordnete Ausnehmung (21) für pulverförmige Produkte aufweist,
wobei jeweils ein Schacht (7, 15) durch den Schieber (9, 19, 49) verschlossen ist.

2. Dosiervorrichtung nach Anspruch 1,
dadurch gekennzeichnet,
daß zwei auswechselbare Schieber (9. 19) mit jeweils einer einem Schacht (7, 15) zugeordneten Ausnehmung (21, 22) vorgesehen sind.

3. Dosiervorrichtung nach Anspruch 1,
dadurch gekennzeichnet,
daß die jeweilige Ausnehmung (21, 22) des zwei Ausnehmungen (21, 22) aufweisenden Schiebers (49) durch eine Veränderung der Lage des Schiebers (49) in ihre Funktionsstellung bringbar ist, in der sie mit dem zugehörigen Schacht (7, 15) zusammenwirkt.

4. Dosiervorrichtung nach einem der Ansprüche 1 bis 3,
dadurch gekennzeichnet,
daß beide Schächte (7, 15) rechteckigen Querschnitt besitzen.

5. Dosiervorrichtung nach einem der Ansprüche 1 bis 4,
dadurch gekennzeichnet,
daß die beiden Schächte (7, 15) für Tabletten und pulverförmige Produkte im rechten Winkel zueinander angeordnet sind.

6. Dosiervorrichtung nach Anspruch 4 oder 5,
dadurch gekennzeichnet,
daß der Schacht (7) für Tabletten parallel und der Schacht (15) für pulverförmige Produkte quer zum Schieber (9, 19, 49) angeordnet ist.

7. Dosiervorrichtung nach einem der Ansprüche 4 bis 6,
dadurch gekennzeichnet,
daß die beiden Schächte (7, 15) kreuzförmig angeordnet sind.

8. Dosiervorrichtung nach einem der Ansprüche 1 bis 7,
dadurch gekennzeichnet,
daß der für die pulverförmigen Produkte bestimmte Schacht (15) schmaler ist als der für Tabletten vorgesehene Schacht (7).

9. Dosiervorrichtung nach einem der Ansprüche 1 bis 8,
dadurch gekennzeichnet,
daß der Schächt (7) für Tabletten bezüglich wenigstens einer Schmalseite (13) aufwärts divergiert.

10. Dosiervorrichtung nach Anspruch 9,
dadurch gekennzeichnet,
daß der Schächt (7) stufenförmig divergiert.

11. Dosiervorrichtung nach Anspruch 9, dadurch gekennzeichnet, daß der Schächt (7) konus-bzw. trichterförmig divergiert.

12. Dosiervorrichtung nach einem der Ansprüche 1 bis 11, dadurch gekennzeichnet, daß in der der Dosierstellung zugewandten Wand (23) der Ausnehmung (22) im Schieber (19) für Tabletten im unteren Bereich eine Aussparung (32) angeordnet ist.

13. Dosiervorrichtung nach einem der Ansprüche 1 bis 12, dadurch gekennzeichnet, daß am Schieber (9, 19, 49) wenigstens eine quer zu seiner Längsrichtung elastisch ausbiegbare Verrastungsnase (36) vorgesehen ist, die in der Ausgangsstellung des Schiebers (9, 19, 49) wenigstens eine Verrastungskante (37) hintergreift.

14. Dosiervorrichtung nach einem der Ansprüche 1 bis 13, dadurch gekennzeichnet, daß der jeweilige Schieber (9, 19, 49) durch eine Feder (28) in seine Ausgangsstellung beaufschlagt ist, die vorzugsweise einstückig am Behälter (2) angeformt ist und sich vorzugsweise im wesentlichen senkrecht zum Schieber (9, 19, 49) erstreckt.

15. Dosiervorrichtung nach einem der Ansprüche 1 bis 14, dadurch gekennzeichnet, daß der oder die Schieber (9, 19, 49) jeweils eine gegenüber dem Querschnitt des Schiebers vergrößerte Betätigungshandhabe (17) aufweisen, die in der Ausgangsstellung des Schiebers (9, 19, 49) mit dem Umfang des Behälters (2) in etwa abschließt und in einen Freiraum (39) des Behälters (2) einschiebbar ist.

16. Dosiervorrichtung nach einem der Ansprüche 1 bis 15, dadurch gekennzeichnet, daß der Behälter (2) im Bereich der Betätigunshandhabe (17) außenseitig gerundet ist und die Betätigungshandhabe (17) die gleiche Rundung aufweist.

FIG.1

FIG.3

FIG.4

FIG.5

FIG.2

FIG. 6

FIG. 8

FIG. 7